Europäisches Patentamt

European Patent Office

Office européen des brevets

(11) Publication number: **0 068 549**
**B1**

# (12) EUROPEAN PATENT SPECIFICATION

(45) Date of publication of patent specification: **23.10.85**

(21) Application number: **82200717.5**

(22) Date of filing: **10.06.82**

(51) Int. Cl.⁴: $G\ 01\ N\ 11/08$, $G\ 01\ N\ 25/04$, $G\ 01\ N\ 33/22$, $G\ 01\ N\ 33/28$

(54) **Method and apparatus for determining cold flow properties of liquid material.**

(30) Priority: **01.07.81 GB 8120341**

(43) Date of publication of application:
**05.01.83 Bulletin 83/01**

(45) Publication of the grant of the patent:
**23.10.85 Bulletin 85/43**

(84) Designated Contracting States:
**DE FR GB IT NL SE**

(56) References cited:
**DE-A-2 634 474**
**GB-A- 988 549**
**GB-A-1 375 862**
**US-A-3 977 235**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Willcock, Richard Ronald**
**Thornton Research Centre P.O. Box 1**
**Chester Cheshire (GB)**

(74) Representative: **Aalbers, Onno et al**
**P.O. Box 302**
**NL-2501 CH The Hague (NL)**

Courier Press, Leamington Spa, England.

## Description

The invention relates to a method and apparatus for determining cold flow properties of a liquid material. More in particular the invention relates to a method for indicating the ability of a liquid material to flow comprising the steps of supplying fluid pressure pulses from a pressure supply to the liquid sample to be tested, measuring and recording pressure pulses and the temperature of the liquid sample and deriving the said recording data information as to the no-flow condition of the sample. The invention also relates to an apparatus for indicating the ability of a liquid material to flow comprising a supply of fluid pressure pulses connected with a sample holder, means for measuring and recording pressure pulses and the temperature of the sample. Such a method and apparatus are described in GB—A—988,549, disclosing a laboratory determination of the pour point of a liquid. However, such a determination of pour point cannot be used as an accurate indication of cold flow properties in production and handling of liquid materials. The determination of these cold flow properties is important, since the production and handling of many liquid materials are limited by their low temperature properties. It will be clear, for example, that big problems arise, if fuels such as aviation fuel domestic fuel fail to flow through the handling system to a burner, due to their limiting low temperature properties. It should be clear that not necessarily the pour point, cloud point or freeze point as normally determined are the limiting factors.

Examples of the above-mentioned materials are domestic heating oils, plastics, paint, ice cream, margarine, oil, distillate fuels, aviation fuels, etc.

The invention particularly relates to avaiation fuels.

One of the critical specifications that limits production of liquid materials such as jet fuel is the freeze point.

This parameter is defined as the temperature at which wax crystals formed on cooling disappear when the temperature of an agitated fuel sample is allowed to rise. However, a major shortcoming of the freeze point specification is that it bears little relation to the fuel property that limits low temperature performance, viz. the ability of the fuel to flow from a fuel tank at low temperature.

Further a laboratory cold fuel test already exists and consists of characterizing the fuel by its hold-up factor: this factor is defined as the amount of fuel that is unable to flow from one section of the tester to a second chamber and varies with the temperature of the fuel.

The most important test parameter is the "0% hold-up temperature", which represents the lowest temperature to which the fuel may be subjected before hold-up (i.e. the inability of at least some of the fuel to flow) will occur.

It is this temperature that is likely to define the limit of a specification based on the low temperature flow properties of the fuel.

A drawback of the above test is that the 0% hold-up temperature cannot be determined directly; the usual procedure is to construct a graph of the temperature dependence of the hold-up factor over a range of readily determined values (typically between 10—90% hold-up) and extrapolate the plot to 0% hold-up to obtain the 0% hold-up temperature.

To minimize errors in the measurement of the 0% hold-up temperature several points are necessary to construct the hold-up temperature profile, particularly in the region of low hold-up factors. This is a time consuming exercise.

It is an object of the invention to provide a method and an apparatus to develop a fast procedure for determining the low temperature flow properties, in particular the point of no-flow and the temperature of no-flow.

Therefore, the method of the invention is characterized in that the fluid pressure pulses are gas pressure pulses from the supply to at least one probe which is surrounded by the liquid sample and in that the gas pressure pulses are measured and recorded.

The apparatus of the invention for indicating the ability of a liquid material to flow is characterized in that the supply is a supply for gas pressure pulses, the said supply being connected to at least one probe which is adapted to be surrounded by the liquid sample and in that the apparatus comprises means for measuring and recording the gas pressure pulses.

The pressure supply to the probe may be air, but any medium suitable for the purpose may be used.

The invention will now be described in more detail with reference to the accompanying drawings, in which:

Fig. 1 represents schematically an example of an embodiment of the invention.

Fig. 2 represents the probe surrounded by the liquid sample in more detail.

Fig. 3 represents a typical pressure trace obtained and recorded from the probe according to the invention.

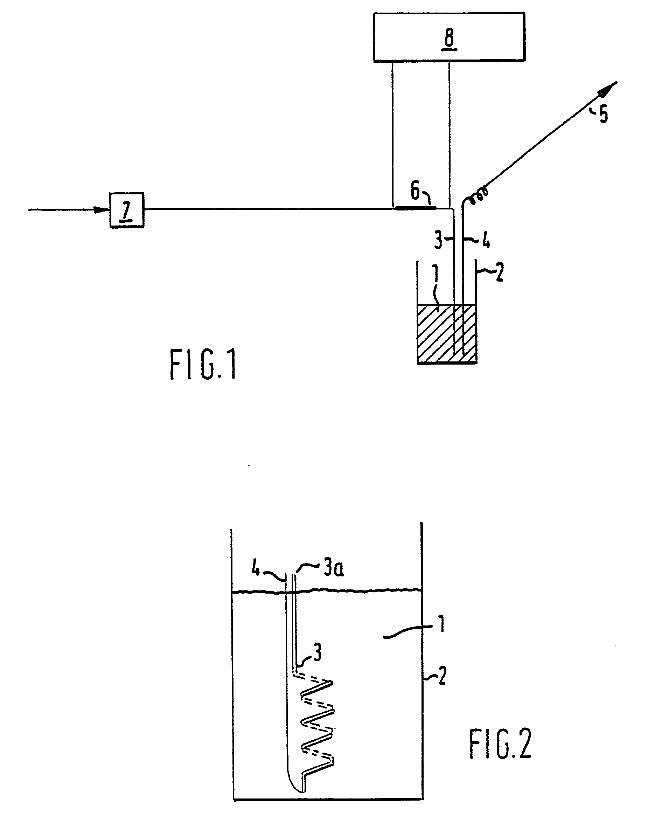

Referring now to Fig. 1 a liquid sample 1 contained within a sample holder 2 has been represented. The liquid surrounds at least one probe 3. Further, a thermocouple 4 has been represented schematically. The thermocouple 4 has been connected by any means suitable for the purpose to a temperature recorder 5 (schematically shown).

The probe 3 is connected through a capillary tube 6 to an air pulse supply system 7 (schematically shown). Both ends of the capillary tube 6 have been connected to a suitable pressure monitor and recorder 8. The supply system 7 comprises any means suitable for obtaining air pulses which are pulsed at suitable intervals through the capillary 6 to the probe 3. The said supply system may for example comprise a device for supplying air, a drier, an air regulator, a manometer, and a solenoid valve. These means are known per se and will not be described in detail. In a typical embodiment of the invention the air probe consists of a stainless steel tube having a bore of 0.6 mm with a thermocouple attached. The thermocouple provides a determination of the relevant temperature. The operation of the device consists of pulsing dry air at about 9 mbar (7 mm Hg) pressure, at 1-minute intervals through a 0.4 mm glass capillary tube to the tip of the probe. The differential pressure is recorded on the recorder and the temperature indicated on a suitable thermometer (not shown).

The probe, with the thermocouple attached, is placed in the sample holder or fuel tank comprising the liquid to be tested and the air flow is started. As already indicated in the above the flow continues to pulse from the tip of the probe until the tip is blocked by wax formed in the fuel.

Fig. 2 represents an embodiment of the probe 3. The same reference numbers as in Fig. 1 have been used.

Air pulses are fed to the probe 3 at its supply end 3a and the air flow continues to pulse from the tip of the probe until wax formed in the fuel blocks the tip. Further a thermocouple 4 is represented to determine the temperature at which wax is formed.

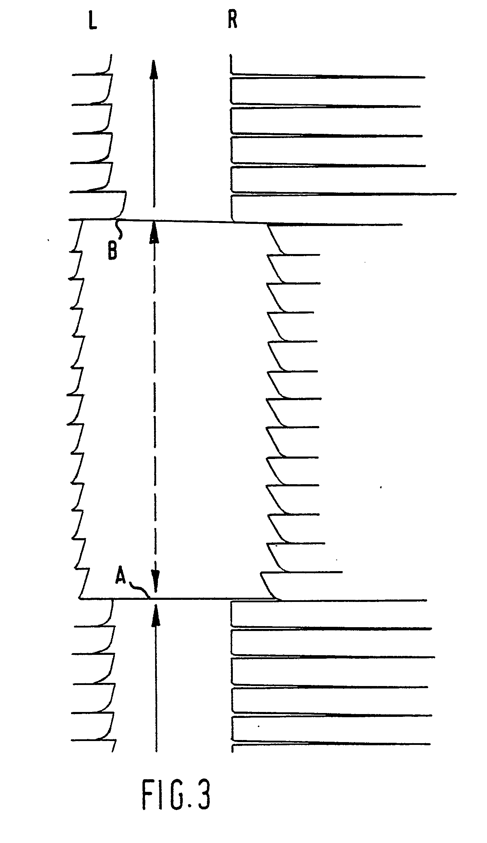

Fig. 3 represents a pressure chart. Such a pressure chart can be derived from the recorder 8.

The left-hand side L of the represented pressure trace indicates the pressure downstream of the capillary tube, whereas the right-hand side R of the trace indicates the pressure upstream of the said tube.

When flow of air ceases due to wax formation on the tip of the probe, the magnitude of the pressure signals changes and the temperature at which this occurs is also noted. The inability of air to flow through the sample is a direct indication of the loss of sample fluidity. In this way the no-flow point can be indicated (point A), together with the no-flow temperature. Further in this pressure trace a shift is present, due to change in absolute pressure.

If the sample is warming up again the air can flow again. This is indicated at point B in the pressure profile and the temperature can again be noted. If the temperature is further increasing pressure signals having a large magnitude are again recorded. Again a shift in the trace is present.

It will be clear for those skilled in the art that any medium suitable for the purpose may be used as the pulse supply, as already indicated in the above. Instead of air, an inert gas such as helium, or nitrogen or oxygen may be used.

Further, the device is not restricted to differential pressure cells. Further, any suitable probe dimensions may be used.

It will be appreciated that any number and shape of probes suitable for the purpose may be used.

It will also be clear that any suitable device for measuring temperatures may be used. As already indicated in the above it is possible to envisage applications both within and outside the petroleum industry, for any situation where the ability of liquid to flow needs to be monitored.

The technique could be applied as easily to aviation fuels, kerosines, other middle distillate fuels, particularly for monitoring fuel condition during storage.

Various modifications of the invention will become apparent to those skilled in the art from the foregoing description and accompanying drawings. Such modifications are intended to fall within the scope of the appended claims.

## Claims

1. A method for indicating the ability of a liquid material to flow comprising the steps of supplying fluid pressure pulses from a pressure supply to the liquid sample to be tested, measuring and recording pressure pulses and the temperature of the liquid sample and deriving from the said recording data information as to the no-flow condition of the sample, characterized in that the fluid pressure pulses are gas pressure pulses from the supply to at least one probe which is surrounded by the liquid sample and in that the gas pressure pulses are measured and recorded.

2. The method as claimed in claim 1, characterized in that the pressure pulses are air pulses.

3. The method as claimed in claim 1 or 2, characterized by the step of measuring the no-flow temperature.

4. An apparatus for indicating the ability of a liquid material to flow comprising a supply of fluid pressure pulses connected with a sample holder, means for measuring and recording pressure pulses and the temperature of the sample, characterized in that the supply is a supply for gas pressure pulses, the said supply being connected to at least one probe which is adapted to be surrounded by the liquid sample and in that the apparatus comprises means for measuring and recording the gas pressure pulses.

5. The apparatus as claimed in claim 4, characterized in that the means for measuring and recording the gas pressure pulses comprises a differential pressure cell.

6. The apparatus as claimed in claim 4 or 5, characterized in that said supply comprises a solenoid valve.

7. The apparatus as claimed in any one of claims 4—6, characterized in that the probe is connected through a capillary tube to the supply of gas pressure pulses.

8. The apparatus as claimed in any one of claims 4—7, characterized by an air pulse supply.

## Patentansprüche

1. Verfahren zur Bestimmung der Kaltfließeigenschaften eines flüssigen Materials, indem Druck-Pulse aus einer Druck-Quelle auf die Probe des flüssigen Materials zur Einwirkung gebracht werden, worauf die Druck-Pulse und die Temperatur der Probe gemessen und aufgezeichnet werden und aus diesen aufgezeichneten Daten eine Information auf Nicht-Fließbedingungen der Probe abgeleitet wird, dadurch gekennzeichnet, daß die Druck-Pulse Gasdruck-Pulse sind aus einer Quelle auf zumindest eine Sonde, die von der Probe umgeben ist, und die Gasdruck-Pulse gemessen und aufgezeichnet werden.

2. Verfahren nach Anspruch 1, dadurch gekennzeichnet, daß die Druck-Pulse Luftdruck-Pulse sind.

3. Verfahren nach Anspruch 1 oder 2, dadurch gekennzeichnet, daß man die Nicht-fließ-Temperatur bestimmt.

4. Vorrichtung zur Bestimmung der Kaltfließeigenschaften eines flüssigen Materials mit einer Quelle für Druck-Pulse verbunden mit einem Probenhalter, sowie Mitteln zur Bestimmung und Aufzeichnung der Druck-Pulse und der Temperatur der Probe, dadurch gekennzeichnet, daß die Druck-Pulsquelle eine solche für Gasdruck-Pulse ist und mit zumindest einer Sonde in Verbindung steht, welche in die Flüssigkeitsprobe einzutauchen vermag, sowie Mittel zur Bestimmung und Aufzeichnung des Gasdruck-Pulse.

5. Vorrichtung nach Anspruch 4, dadurch gekennzeichnet, daß das Mittel für Bestimmung und Aufzeichnung der Gasdruck-Pulse eine Differentialdruckzelle enthält.

6. Vorrichtung nach Anspruch 4 oder 5, dadurch gekennzeichnet, daß die Druckquelle ein Solenoidventil enthält.

7. Vorrichtung nach einem der Ansprüche 4 bis 6, dadurch gekennzeichnet, daß die Sonde über ein Kapillarrohr mit der Gasdruckpulsquelle verbunden ist.

8. Vorrichtung nach einem der Ansprüche 4 bis 7, gekennzeichnet durch eine Quelle für Luftdruck-Pulse.

**Revendications**

1. Procédé pour indiquer l'aptitude d'une matière liquide à s'écouler, comprenant les phases qui consistent à transmettre des impulsions de pression de fluide d'une source de pression à l'échantillon liquide à examiner, à mesurer et à enregistrer les impulsions de pression et la température de l'échantillon liquide et à tirer des données dudit enregistrement une information concernant l'état de non écoulement de l'échantillon, caractérisé en ce que les impulsions de pression de fluide sont des impulsions de pression gazeuse envoyées de la source à au moins une sonde qui est entourée par l'échantillon de liquide et en ce que les impulsions de pression gazeuse sont mesurées et enregistrées.

2. Procédé selon la revendication 1, caractérisé en ce que les impulsions de pression sont des impulsions d'air.

3. Procédé selon la revendication 1 ou 2, caractérisé par la phase consistant à mesurer la température de non écoulement.

4. Appareil destiné à indiquer l'aptitude d'une matière liquide à s'écouler, comprenant une source d'impulsions de pression de fluide reliée à un récipient d'échantillon, des moyens destinés à mesurer et à enregistrer des impulsions de pression et la température de l'échantillon, caractérisé en ce que la source est une source d'impulsions de pression gazeuse, ladite source étant reliée à au moins une sonde qui est adaptée pour être entourée par l'échantillon de liquide et en ce que l'appareil comprend des moyens servant à mesurer et à enregistrer les impulsions de pression gazeuse.

5. Appareil selon la revendication 4, caractérisé en ce que les moyens servant à mesurer et à enregistrer les impulsions de pression gazeuse comprennent une cellule à pression différentielle.

6. Appareil selon la revendication 4 ou 5, caractérisé en ce que ladite source comprend une électro-valve.

7. Appareil selon l'une quelconque des revendications 4 à 6, caractérisé en ce que la sonde est connectée à la source d'impulsions de pression gazeuse par l'intermédiaire d'un tube capillaire.

8. Appareil selon l'une quelconque des revendications 4 à 7, caractérisé par une source d'impulsions d'air.

FIG.1

FIG.2

FIG.3